(19) Europäisches Patentamt
European Patent Office
Office européen des brevets

(11) Publication number: **0 100 087**
**A2**

(12) **EUROPEAN PATENT APPLICATION**

(21) Application number: **83107317.6**

(22) Date of filing: **26.07.83**

(51) Int. Cl.$^3$: **C 07 C 87/06**, C 07 C 87/30, C 08 K 5/00, C 07 F 11/00

(30) Priority: **28.07.82 US 402481**
**28.07.82 US 402484**
**28.07.82 US 402482**
**28.07.82 US 402477**
**28.07.82 US 402479**
**28.07.82 US 402478**
**28.07.82 US 402480**

(43) Date of publication of application: **08.02.84**
**Bulletin 84/6**

(84) Designated Contracting States: **CH DE FR GB LI NL**

(71) Applicant: **The B.F. GOODRICH Company, Dept. 0015 WHB-6 500 South Main Street, Akron, Ohio 44318 (US)**

(72) Inventor: **Kroenke, William Joseph, 8485 Sunnydale Drive, Brecksville Ohio 44141 (US)**

(74) Representative: **von Kreisler, Alek, Dipl.-Chem. et al, Deichmannhaus am Hauptbahnhof, D-5000 Köln 1 (DE)**

(54) **Novel amine molybdates.**

(57) The present invention describes a novel group of amine molybdates consisting of tetrapentyl-ammonium molybdates, tri(tridecyl)ammonium molybdates, tridodecylammonium molybdates, tridodecyldimethylammonium molybdates, methyltricaprylammonium molybdates, dimethyldioctadecylammonium molybdates and trioctylammonium molybdates.

**EP 0 100 087 A2**

0100087



# NOVEL AMINE MOLYBDATES

## BACKGROUND OF THE INVENTION

Amine molybdates may be produced by reacting an amine or an amine salt with a molybdenum compound such as molybdenum trioxide ($MoO_3$), molybdic acid or a molybdenum salt in an acidic aqueous medium made acidic through the addition of a suitable acid such as an inorganic acid (exemplified by hydrochloric acid, nitric acid or sulfuric acid) or an organic acid containing 1 to 12 carbon atoms (exemplified by acetic acid, propionic acid, benzoic acid, and the like). The acidic mixture is refluxed, preferably while being stirred continuously, until the reaction is complete, usually for about 1/4 to 4 hours.

Amine molybdates also may be produced, as described in U.S. Patent No. 4,217,292, by reacting essentially stoichiometric quantities of molybdenum trioxide with an amine or an amine salt in an aqueous medium essentially free of acid and in which a water-soluble ammonium or monovalent metal or divalent metal or trivalent rare earth metal salt of an inorganic or organic acid is dissolved. Sometimes the reaction is carried out in a polar organic solvent instead of water.

The particular amine molybdate formed may depend upon which process is used to form the amine molybdates and the quantity of reactants present in the reaction mixture, as well as the reaction condition.

## SUMMARY OF THE INVENTION

The present invention pertains to novel amine molybdates, namely:

tetrapentylammonium molybdates, which may be represented by the formula

$$[(C_5H_{11})_4N]_aMo_bO_cH_d$$

where a,b and c are (2,2,7); (3,5,17);

(2,6,19); (6,7,24) or (4,8,26) and d is 0 or 1,

tri(tridecyl)ammonium molybdates, which may be represented by the formula:

$[(C_{13}H_{27})_3NH]_aMo_bO_c$

where a, b and c are (2,6,19); (4,8,26) or (6,7,24),

tridodecylammonium molybdates, which may be represented by the formula:

$[(C_{12}H_{25})_3NH]_aMo_bO_c$

where a, b, and c are (2,6,19); (6,7,24) or (4,8,26),

didodecyldimethylammonium molybdates, which may be represented by the formula:

$[(CH_3)_2(C_{12}H_{25})_2N]_aMo_bO_c$

where a, b and c are (2,6,19); (6,7,24) or (4,8,26),

methyltricaprylammonium molybdates which may be represented by the formula:

$[CH_3(C_8H_{17})_3N)_aMo_bO_cH_d$

where a, b and c are (2,2,7); (3,5,17); (2,6,19); (4,8,26) or (6,7,24) and d is 0 or 1,

dimethyldioctadecylammonium molybdates, which may be represented by the formula:

$[(CH_3)_2(C_{18}H_{37})_2N]_aMo_bO_c$

where a, b and c are (2,6,19); (6,7,24) or 4,8,26) and

trioctylammonium molybdates, which may be represented by the formula:

$[(C_8H_{17})_3NH]_aMo_bO_c$

where a, b and c are (2,6,19); (6,7,24) or 4,8,26).

Like many other amine molybdates, the novel amine molybdates of the present invention function as

effective smoke retardant additives for vinyl chloride polymers.

## DETAILED DESCRIPTION OF THE INVENTION

The tetrapentylammonium molybdates may be produced by reacting ammonium dimolybdate [$(NH_4)_2Mo_2O_7$] and tetrapentylammonium bromide [$(C_5H_{11})_4N$]Br in an acidic aqueous medium. Suitable acids include inorganic acids, such as hydrochloric acid, nitric acid, or sulfuric acid, or mixtures thereof, or organic acids, such as acetic acid, propionic acid, or benzoic acid. The amount of acid used may be varied widely from about 1/2 to 10 or more molar equivalents of acid per molar equivalent of ammonium dimolybdate. However, about 1/1 molar equivalent ratio is preferred. Sufficient water is included in the reaction mixture to insure a reaction mixture that has a consistency that enables it to be easily stirred. The mixture is heated to reflux and refluxed for about 10 minutes to 16 hours, preferably while being stirred continuously. After the reaction is completed, the solid reaction product is separated from the aqueous medium by filtration, centrifugation, or other suitable separation procedure. The recovered solid reaction product desirably is washed with water and then is dried. The molar ratio of ammonium dimolybdate to tetrapentylammonium bromide will influence which tetrapentylammonium molybdate product is formed as a result of the reaction. Theoretical molybdate/tetrapentylammonium bromide molar ratios from 0.5/1 to 3/1 are used. However, the actual molar ratios that can be used in the reaction can be outside the stated range.

Not all of the realizable tetrapentylammonium molybdates can be conveniently prepared

directly by the process described. Some can be best prepared by reacting previously formed tetrapentylammonium molybdates with either a strong inorganic acid, such as hydrochloric acid, or tetrapentylammonium hydroxide in polar solvents, such as water, methanol and acetonitrile.

The tetrapentylammonium molybdates within the scope of the present invention are tetrapentylammonium dimolybdate $[(C_5H_{11})_4N]_2Mo_2O_7$, tetrapentylammonium hexamolybdate $[(C_5H_{11})_4N]_2Mo_6O_{19}$, tetrapentylammonium pentamolybdate $[(C_5H_{11})_4N]_3Mo_5O_{17}H$, tetrapentylammonium heptamolybdate $[(C_5H_{11})_4N]_6Mo_7O_{24}$ and tetrapentylammonium octamolybdate $[(C_5H_{11})_4Mo_8O_{26}$.

The tri(tridecyl)ammonium molybdates may be produced by reacting ammonium dimolybdate $[(NH_4)_2Mo_2O_7]$ and tri(tridecyl) amine $[(C_{13}H_{27})_3N]$ in an acidic aqueous medium. Suitable acids include inorganic acids, such as hydrochloric acid, nitric acid, sulfuric acid, and the like, or mixtures thereof. The amount of acid used may be varied widely from about 1/2 to 10 or more molar equivalents of acid per molar equivalent of ammonium dimolybdate. However, about a 1/1 molar equivalent ratio is preferred. Sufficient water is included in the reaction mixture to insure a reaction medium that has a consistency that enables it to be easily stirred. Since tri(tridecyl)amine and the tri(tridecyl)ammonium molybdates of the present invention are insoluble in an aqueous medium, preferably, the ammonium dimolybdate is dissolved in the aforementioned aqueous medium while the tri-(tridecyl)amine is dissolved in an organic solvent that is a solvent both for the tri(tridecyl)amine of

the reaction mixture and for the amine molybdate reaction product and that is immiscible in water (benzene, toluene, methylene chloride or cyclohexane, for example). The two immiscible solutions are mixed together and heated to reflux while being stirred. The reaction materials are refluxed while being stirred continuously for about 0.25 to 16 hours. The tri(tridecyl)ammonium molybdate reaction product remains dissolved in the organic solvent phase of the mixture. After the reaction is completed, the two immiscible factions are separated from each other. The organic solvent phase, containing the tri-(tridecyl)ammonium molybdate, is washed with water and dried over an appropriate desiccant, such as calcium hydride. If desired, the organic solvent can be removed from the tri(tridecyl)ammonium molybdate by evaporation or distillation. The molar ratio of ammonium dimolybdate to tri(tridecyl)amine will influence the tri(tridecyl)ammonium molybdates formed as a result of the reaction. Theoretical molybdenum/tri(tridecyl)amine molar ratios from 0.5/1 to 3/1 are used. However, the actual molar ratios that can be used in the reaction can be outside the stated range, but generally will produce mixtures of the molybdates. The tri(tridecyl)ammonium molybdates within the scope of the present invention are tri-(tridecyl)ammonium hexamolybdate $[(C_{13}H_{27})_3NH]_2Mo_6O_{19}$, tri(tridecyl)-ammonium heptamolybdate $[(C_{13}H_{27})_3NH]_6Mo_7O_{24}$ and tri(tridecyl)-ammonium octamolybdate $[(C_{13}H_{27})_3NH]_4Mo_8O_{26}$

The tridodecylammonium molybdates may be produced by reacting ammonium dimolybdate $[(NH_4)_2Mo_2O_7]$ and tridodecylamine

$[(C_{12}H_{25})_3N]$ in an acidic aqueous medium. Suitable acids include inorganic acids, such as hydrochloric acid, nitric acid, sulfuric acid, and the like, or mixtures thereof. The amount of acid used may be varied widely from about 1/2 to 10 or more molar equivalents of acid per molar equivalent of ammonium dimolybdate. However, about a 1/1 molar equivalent ratio is preferred. Sufficient water is included in the reaction mixture to insure a reaction medium that has a consistency that enables it to be easily stirred. Since tridodecylamine and the tridodecylammonium molybdates of the present invention are insoluble in an aqueous medium, preferably, the ammonium dimolybdate is dissolved in the aforementioned aqueous medium while the tridodecylamine is dissolved in an organic solvent that is a solvent both for the tridodecylamine of the reaction mixture and for the amine molybdate reaction product and that is immiscible in water (benzene, toluene, methylene chloride, methanol or cyclohexane, for example). The two immiscible solutions are mixed together and heated to reflux while being stirred. The reaction materials are refluxed while being stirred continuously for about 0.25 to 16 hours, preferably at a temperature between 75° to 110(d)C. The tridodecylammonium molybdate reaction product remains dissolved in the organic solvent phase of the mixture. After the reaction is completed, the two immiscible factions are separated from each other. The organic solvent phase, containing the tridodecylammonium molybdate, desirably is washed with water and dried over an appropriate desiccant, such as calcium hydride. If desired, the organic solvent can be removed from the tridodecylammonium molybdate by evaporation or distillation. The molar ratio of

ammonium dimolybdate to tridodecylamine will influence the tridodecylammonium molybdates formed as a result of the reaction. Theoretical molybdenum/tridodecylamine molar ratios from 0.5/1 to 3/1 are used. However, the actual molar ratios that can be used in the reaction can be outside the stated range, but generally will produce mixtures of the molybdates. The tridodecylammonium molybdates within the scope of the present invention are tridodecylammonium hexamolybdate $[(C_{12}H_{25})_3NH]_2Mo_6O_{19}$, tridodecylammonium heptamolybdate $[(C_{12}H_{25})_3NH]_6Mo_7O_{24}$ and tridodecylammonium octamolybdate $[(C_{12}H_{25})_3NH]_4Mo_8O_{26}$.

The didodecyldimethylammonium molybdates may be produced by reacting ammonium dimolybdate $[(NH_4)_2Mo_2O_7]$ and didodecyldimethylammonium bromide $[(CH_3)_2(C_{12}H_{25})_2NBr$ in an acidic aqueous medium. Suitable acids include inorganic acids, such as hydrochloric acid, nitric acid, sulfuric acid, and the like, or mixtures thereof. The amount of acid used may be varied widely from about 1/2 to 10 or more molar equivalents of acid per molar equivalent of ammonium dimolybdate. However, about a 1/1 molar equivalent ratio is preferred. Sufficient water is included in the reaction mixture to insure a reaction medium that has a consistency that enables it to be easily stirred. The mixture is heated to reflux and refluxed for about 10 minutes to 16 hours, preferably while being stirred continuously. After the reaction is completed, the solid reaction product is separated from the aqueous medium by filtration, centrifugation, or other suitable separation procedure. The recovered solid reaction product desirably is washed with water and then is dried. The

molar ratio of ammonium dimolybdate to didodecyldimethylammonium bromide will influence the didodecyldimethylammonium molybdate product formed as a result of the reaction. Theoretical molybdate/didodecyldimethylammonium bromide molar ratios from 0.5/1 to 3/1 are used. However, the actual molar ratios that can be used in the reaction can be outside the stated range.

The didodecyldimethylammonium molybdates within the scope of the present invention are didodecyldimethylammonium hexamolybdate $[(CH_3)_2(C_{12}H_{25})_2N]_2Mo_6O_{19}$, didodecyldimethylammonium heptamolybdate $[(CH_3)_2(C_{12}H_{25})_2N]_6Mo_7O_{24}$, and didodecyldimethylammonium octamolybdate $[(CH_3)_2(C_{12}H_{25})_2N]_4Mo_8O_{26}$.

The methyltricaprylammonium molybdates may be produced by reacting ammonium dimolybdate $[(NH_4)_2Mo_2O_7]$ and methyltricaprylammonium chloride, $[CH_3(C_8H_{17})_3NCl]$, (Aliquat 336 manufactured by Henkel Corporation) in an acidic aqueous medium. (Since Aliquat 336 consists mainly of a mixture of about 60% $C_8$ and 30% $C_{10}$ hydrocarbon chains, the "capryl" group herein is represented as $C_8H_{17}$.) Suitable acids include inorganic acids, such as hydrochloric acid, nitric acid, sulfuric acid, and the like, or mixtures thereof. The amount of acid used may be varied widely from about 1/2 to 10 or more molar equivalents of acid per molar equivalent of ammonium dimolybdate. However, about a 1/1 molar equivalent ratio is preferred. Sufficient water is included in the reaction mixture to insure a reaction medium that has a consistency that enables it to be easily stirred. The reaction mixture is heated to reflux while being stirred. The

reaction materials are refluxed while being stirred continuously for about 0:25 to 16 hours, preferably at a temperature between 75° to 110°C. After the reaction is completed, the methyltricaprylammonium molybdate reaction product is separated from the aqueous phase by filtration or other separation procedure. The methyltricaprylammonium molybdate is washed with water and dried. The molar ratio of ammonium dimolybdate to methyltricaprylammonium chloride will influence the methyltricaprylammonium molybdates formed as a result of the reaction. Theoretical molybdenum methyltricaprylammonium chloride molar ratios from 0.5/1 to 3/1 are used. However, the actual molar ratios that can be used in the reaction can be outside the stated range, but generally will produce mixtures of the molybdates. Not all of the realizable methyltricaprylammonium molybdates can be prepared as described above. Some of them can be best prepared by reacting previously formed methyltricaprylammonium molybdates with either a strong inorganic acid, such as hydrochloric acid, or methyltricaprylammonium hydroxide in polar solvents, such as water, methanol and acetonitrile. The methyltricaprylammonium molybdates within the scope of the present invention are methyltricaprylammonium monomolybdate $[CH_3(C_8H_{17})_3N]_2MoO_4$, methyltricaprylammonium dimolybdate $[CH_3(C_8H_{17})_3N]_2Mo_2O_7$, methyltricaprylammonium pentamolybdate $[CH_3(C_8H_{17})_3N]_3Mo_5O_{17}H$, methyltricaprylammonium hexamolybdate $[CH_3(C_8H_{17})_3N]_2Mo_6O_{19}$, methyltricaprylammonium heptamolybdate $[CH_3(C_8H_{17})_3N]_6Mo_7O_{24}$, and methyltricaprylammonium octamolybdate $[CH_3(C_7H_{17})_3N]_4Mo_8O_{26}$.

The dimethyldioctadecylammonium molybdates may be produced by reacting ammonium dimolybdate [$(NH_4)_2Mo_2O_7$] and dimethyldioctadecylammonium bromide [$(CH_3)_2(C_{18}H_{37})_2N$]Br in an acidic aqueous medium. Suitable acids include inorganic acids, such as hydrochloric acid, nitric acid, or sulfuric acid, or mixtures thereof, or organic acids, such as acetic acid, propionic acid, or benzoic acid. The amount of acid used may be varied widely from about 1/2 to 10 or more molar equivalents of acid per molar equivalent of ammonium dimolybdate. However, about a 1/1 molar equivalent ratio is preferred. Sufficient water is included in the reaction mixture to insure a reaction mixture that has a consistency that enables it to be easily stirred. The mixture is heated to reflux and refluxed for about 10 minutes to 16 hours, preferably while being stirred continuously. After the reaction is completed, the solid reaction product is separated from the aqueous medium by filtration, centrifugation, or other suitable separation procedure. The recovered solid reaction product desirably is washed with water and then is dried. The molar ratio of ammonium dimolybdate to dimethyldioctadecylammonium bromide will influence the dimethyldioctadecylammonium molybdate product formed as a result of the reaction. Theoretical molybdate/dimethyldioctadecylammonium bromide molar ratios from 0.5/1 to 3/1 are used. However, the actual molar ratios that can be used in the reaction can be outside the stated range. Not all of the realizable dimethyldioctadecylammonium molybdates can be prepared as described above. Some of them can be best prepared by reacting previously formed dimethyldioctadecylammonium molybdates with a strong inorganic acid, such as hydrochloric acid, in polar solvents, such as water, methanol, and acetonitrile.

The dimethyldioctadecylammonium molybdates within the scope of the present invention are dimethyldioctadecylammonium hexamolybdate $[(CH_3)_2(C_{18}H_{37})_2N]_2Mo_6O_{19}$, dimethyldioctadecylammonium heptamolybdate $[(CH_3)_2(C_{18}H_{37})_2N]_6Mo_7O_{24}$ and dimethyldioctadecylammonium octamolybdates $[(CH_3)_2(C_{18}H_{37})_2N]_4Mo_8O_{26}$.

The trioctylammonium molybdates may be produced by reacting ammonium dimolybdate $[(NH_4)_2Mo_2O_7]$ and trioctylamine $[(C_8H_{17})_3N]$ in an acidic aqueous medium. Suitable acids include inorganic acids such as hydrochloric acid, nitric acid, or sulfuric acid, or mixtures thereof. The amount of acid used may be varied widely from about 1/2 to 10 or more molar equivalents of acid per molar equivalent of ammonium dimolybdate. However, about a 1/1 molar equivalent ratio is preferred. Sufficient water is included in the reaction mixture to insure a reaction mixture that has a consistency that enables it to be easily stirred. The mixture is heated to reflux and refluxed for about 10 minutes to 16 hours, preferably while being stirred continuously. After the reaction is completed, the solid reaction product is separated from the aqueous medium by filtration, centrifugation, or other suitable separation procedure. The recovered solid reaction product desirably is washed with water and then is dried. The molar ratio of ammonium dimolybdate to trioctylamine will influence the trioctylammonium molybdate product formed as a result of the reaction. Theoretical molybdate/trioctylamine molar ratios from 0.5/1 to 3/1 are used. However, the actual molar ratios that can be used in the reaction can be outside the stated range.

Not all of the realizable trioctylammonium molybdates can be prepared as described above. Certain of them can be best prepared by reacting previously formed trioctylammonium molybdates with a strong inorganic acid, such as hydrochloric acid, in polar solvents such as water, methanol, and acetonitrile.

The trioctylammonium molybdates within the scope of the present invention are trioctylammonium hexamolybdates $[(C_8H_{17})_3NH]_2Mo_6O_{19}$, trioctylammonium heptamolybdates $[(C_8H_{17})_3NH]_6Mo_7O_{24}$ and trioctylammonium octamolybdates $[(C_8H_{17})_3NH]_4Mo_8O_{26}$.

The following examples more fully illustrate the preparation of the novel amine molybdates of the present invention.

EXAMPLE I

2.60 grams of 37 percent hydrochloric acid solution were mixed with 200 milliliters of water and, together with 10.00 grams of tetrapentylammonium bromide, were added to a 500 milliliter round-bottom flask equipped with a water-cooled condenser and a mechanical stirrer. 8.98 grams of ammonium dimolybdate were dissolved in 50 milliliters of hot water and were added to the flask. The mixture in the flask was heated to reflux and refluxed for 30 minutes. The contents of the flask were filtered through a Buchner funnel, a yellow residue being retained on the filter paper. The residue was washed three times with about 50 milliliters of water and dried in a vacuum oven maintained at about 75°C. for 3 hours. 13.77 grams of residue were recovered which was identified by infrared analysis to be a mixture of tetrapentylammonium hexamolybdate and tetrapentylammonium alpha-octamolybdate.

EXAMPLE II

9.51 grams of tetrapentylammonium alpha-octamolybdate ($[(C_5H_{11})_4N]_4Mo_8O_{26}$) and 80 milliliters of acetonitrile were charged into a 125 milliliter Erlenmeyer flask and stirred. 4.95 grams of tetrabutylammonium hydroxide dissolved in 50 milliliters of ethanol were added to the flask. The contents of the flask were stirred until dissolution was substantially complete. The solution was filtered to remove any undissolved component and combined with ether. An oily layer formed. The oily layer was separated from the ether and dissolved in acetonitrile. Ether was added to the solution with stirring until an oily layer again was formed. The solvent layer was decanted from the oily layer. The oily layer again was dissolved in acetonitrile. The solution was roto-evaporated to dryness. A cream colored viscous liquid, identified by infrared analysis to be tetrapentylammonium dimolybdate, was recovered.

EXAMPLE III

2.25 grams of tetrapentylammonium dimolybdate was added to a 100 milliliter Erlenmeyer flask. 0.20 gram of a 37 percent hydrochloric acid solution was mixed with 50 milliliters of water and added to the flask. The contents of the flask were stirred for 5 minutes. A solid precipitate was formed. The contents of the flask were filtered. A cream-yellow solid residue was recovered and dried in a vacuum oven at 25°C. for 16 hours. Infrared analysis identified the residue as tetrapentylammonium pentamolybdate.

EXAMPLE IV

4.76 grams of tetrapentylammonium alpha-octamolybdate and 20 milliliters of acetonitrile were

added to a 50 milliliter Erlenmeyer flask and stirred. 0.05 milliliter of a 37 percent hydrochloric acid solution was added to the flask. The contents of the flask were stirred at room temperature (about 25°C.) for 1/2 hour. A yellow precipitate formed. The contents of the flask were filtered. The yellow solid residue was dried in a vacuum oven at 25°C. for 16 hours. Infrared analysis identified the residue as tetrapentyl- ammonium hexamolybdate.

EXAMPLE V

21.19 grams of tetrapentylammonium bromide and 1000 milliliters of water were added to a 2000 milliliter beaker and stirred together until the tetrapentylammonium bromide dissolved in the water. 19.77 grams of ammonium heptamolybdate was dissolved in 200 milliliters of water and added to the beaker. The contents of the beaker were stirred for 2 minutes. A white precipitate formed. The contents of the beaker were filtered. The precipitate was dried in a vacuum oven for two days at room temperature. Infrared analysis identified the white crystalline solid as tetrapentylammonium alpha-octamolybdate.

EXAMPLE VI

2.0 grams of ammonium heptamolybdate and 20 milliliters of water were added to a 50 milliliter Erlenmeyer flask equipped with a mechanical stirrer and stirred together until the ammonium heptamolybdate had dissolved in the water. 2.12 grams of tetrapentylammonium bromide were added to the flask. The contents of the flask were stirred for 15 minutes. An off-white precipitate was formed. The contents of the flask were filtered. The residue was washed with separate washes of water, ethanol, acetone and ether. The washed residue was dried in a

vacuum oven at 25°C. for two hours. Infrared analysis identified the residue as being impure tetrapentylammonium beta-octamolybdate. The residue then was dissolved in 20 milliliters of acetonitrile and stored at approximately -10°C. for 16 hours. The solution was filtered and the residue was vacuum dried at 25°C. for two hours. The off-white crystalline residue was identified by infrared analysis to be tetrapentylammonium beta-octamolybdate.

EXAMPLE VII

5.00 grams of tri(tridecyl)amine were added to a 500 milliliter round-bottom flask equipped with a water-cooled condenser and a mechanical stirrer. 50 milliliters of methanol then were added to the flask, followed by the addition (in the order stated) of 4.47 grams of ammonium dimolybdate, 25 additional milliliters of methanol, 2.59 grams of a 37 percent hydrochloric acid solution mixed into 25 milliliters of methanol, and a final addition of 25 milliliters of methanol. The cloudy mixture in the flask was heated to reflux and refluxed while being stirred continuously for 1/2 hour. As the mixture was heated, it became light green in color, changed to yellow, then yellow-green, and finally to green. The contents of the flask were cooled to room temperature (about 25°C.). The methanol phase (which contained a sticky green mass) then was separated from the aqueous phase, poured through a coarse filter paper and collected in an Erlenmeyer flask, the sticky green mass settling to the bottom of the Erlenmeyer flask. The methanol was decanted off and the green mass was washed 3 times with methanol, decanting off the methanol wash after each washing. The green product was dried in a vacuum oven at 40°C. for 1 hour. The reaction product then was added to 45 milliliters of methylene chloride. The green sticky mass in the reaction product dissolved in the methylene chloride. The solution was filtered through a medium filter paper, the green liquid filtrate being collected in an Erlenmeyer flask. Infrared analysis identified the green sticky mass to be tri(tridecyl)ammonium hexamolybdate.

EXAMPLE VIII

6.00 grams of tri(tridecyl)amine were dissolved in 80 milliliters of methylene chloride and added to a 1000 milliliter round-bottom flask equipped with a water-cooled condenser and a mechanical stirrer. 126 additional milliliters of methylene chloride were added to the flask. 3.58 grams of ammonium dimolybdate were dissolved in 160 milliliters of water. 2.07 grams of 37 percent hydrochloric acid were added to 20 milliliters of water. The queous hydrochloric acid solution was combined with the ammonium dimolybdate solution. The combined aqueous solutions were added to the round-bottom flask. 26 milliliters of additional water were added to the flask. The mixture in the flask was heated to reflux and refluxed while being stirred continuously for one hour. As the mixture was heated, the cloudy white mixture changed to light green in color. The contents in the flask were cooled to room temperature (about 25°C.) and added to a separatory funnel and the two immiscible phases were separated, one phase being an aqueous phase and the other being the methylene chloride phase. The methylene chloride phase was washed three times with water, separating the methylene chloride phase from the water phase after each washing. The reaction product which remained dissolved in the methylene chloride phase was identified by infrared analysis to be a mixture

predominately of tri(tridecyl)-ammonium beta-octamolybdate with a small amount of tri(tridecyl)-ammonium alpha-octamolybdate.

EXAMPLE IX

3.91 grams of ammonium dimolybdate were dissolved in 180 milliliters of water. The solution was added to a 1000 milliliter round-bottom flask equipped with a water-cooled condenser and a mechanical stirrer. 2.27 grams of a 37 percent hydrochloric acid solution were added to the flask with 45 milliliters of water. 6.00 grams of tridodecylamine were dissolved in 200 milliliters of cyclohexane and were added to the flask with an additional 25 milliliters of cyclohexane. The reaction mixture in the flask was heated to reflux and refluxed while being stirred continuously for 1/2 hour. The contents of the flask were cooled to room temperature (about 25°C.) and transferred into a separatory funnel. The aqueous phase was removed from the separatory funnel, leaving the cyclohexane phase in which the amine molybdate reaction product is dissolved remaining. The cyclohexane phase was washed three times with 25 milliliters of water, separating the wash water from the cyclohexane phase after each washing. The cyclohexane phase then was dried over 3A molecular sieves. The yellow-colored product remaining as a residue after evaporating the cyclohexane from a sample of the cyclohexane phase was identified by infrared analysis to be tridodecylammonium alpha-octamolybdate.

EXAMPLE X

5.00 grams of tridodecylamine were added to a 250 milliliter round-bottom flask equipped with a water-cooled condenser and a mechanical stirrer. 50 milliliters of methanol then was added to the flask,

followed by the addition (in the order stated) of 4.88 grams of ammonium dimolybdate, 25 additional milliliters of methanol, 2.83 grams of a 37 percent hydrochloric acid solution mixed into 25 milliliters of methanol, and a final addition of 25 milliliters of methanol. The cloudy mixture in the flask was heated to reflux and refluxed while being stirred continuously for 25 minutes. As the mixture was heated, it first became yellow in color and then changed to green in color. The contents of the flask were cooled to room temperature (about 25°C.). White particles of ammonium chloride and a viscous dark green mass were observed in the methanol medium. The methanol was poured off the green mass. The mass then was washed three times with methanol, decanting off the methanol wash after each washing. The green reaction product was dried in a vacuum oven at 40°C. overnight (approximately 16 hours) and was dissolved in 45 milliliters of methylene chloride. The solution which contained particles of ammonium chloride was filtered to remove the ammonium chloride from the solution. After evaporating the methylene chloride from a sample of the solution, the dark green residue was identified by infrared analysis to be tridodecylammonium hexamolybdate.

EXAMPLE XI

3.91 grams of ammonium dimolybdate were dissolved in 180 milliliters of water. The solution was added to a 1000 milliliter round-bottom flask equipped with a water-cooled condenser and a mechanical stirrer. 2.27 grams of a 37 percent hydrochloric acid solution were added to the flask with 45 milliliters of water. 6.00 grams of tridodecylamine were dissolved in 200 milliliters of methylene chloride and were added to the flask with an additional 25

milliliters of methylene chloride. The reaction mixture in the flask was heated to reflux and refluxed while being stirred continuously for 1 hour. The contents of the flask were cooled to room temperature (about 25°C.) and transferred into a 1000 milliliter separatory funnel. The aqueous layer was removed from the separatory funnel, leaving the methylene chloride layer in which the amine molybdate reaction product is dissolved. The methylene chloride phase was washed three times with 25 milliliters of water, separating the wash water from the methylene chloride phase after each washing. The methylene chloride phase was dried over 3A molecular sieves. The yellow-colored residue remaining after evaporating the methylene chloride from a sample of the methylene chloride phase was identified by infrared analysis to be tridodecylammonium beta-octamolybdate.

EXAMPLE XII

2.13 grams of a 37 percent hydrochloric acid solution were mixed with 200 milliliters of water and were added to a 500 milliliter round-bottom flask equipped with a water-cooled condenser and a mechanical stirrer. 10.00 grams of didodecyldimethylammonium bromide was added to the flask and the contents of the flask were heated to reflux. 7.35 grams of ammonium dimolybdate were dissolved in 50 milliliters of hot water. The resulting cloudy hot solution was added to the flask. The mixture within the flask was heated to reflux and refluxed for 30 minutes while being stirred continuously. The contents of the flask was filtered through a Buchner funnel. The fine white powder remaining on the filter paper was washed three times with 25 milliliters of water and dried in a vacuum oven maintained at

about 75°C. for 16 hours. 13.87 grams of residue were recovered. The residue was identified by infrared analysis to be didodecyldimethylammonium betaoctamolybdate.

EXAMPLE XIII

2.72 grams of didodecyldimethylammonium octamolybdate and 20 milliliters of acetonitrile were added to a 50 milliliter Erlenmeyer flask and stirred until the didodecyldimethylammonium octamolybdate was dispersed. 0.08 gram of concentrated sulfuric acid was mixed with 3 milliliters of water and added to the flask. The contents of the flask were warmed and stirred for two hours. The contents of the flask were cooled to room temperature (about 25°C.). A yellow precipitate formed. The contents of the flask were filtered. The yellow residue was dried in a vacuum oven at 40°C. for 16 hours. Infrared analysis identified the yellow solid as didodecyldimethylammonium hexamolybdate.

EXAMPLE XIV

20.00 grams of methyltricaprylammonium chloride (Aliquat 336) were added to a 1000 milliliter round-bottom flask equipped with a water-cooled condenser and a mechanical stirrer. 200 milliliters of water then were added to the flask. 3.92 grams of a 37 percent hydrochloric acid solution were mixed with 200 milliliters of water and the resulting solution was added to the flask. The contents of the flask were brought to reflux. 13.92 grams of ammonium dimolybdate were added to 100 milliliters of water and heated while being stirred to about 50°C. and then added to the flask. The mixture in the flask was heated to reflux and refluxed while being stirred continuously for 1 hour. The contents of the flask were cooled to room temperature (about 25°C.)

in an ice bath and then were poured through a Buchner funnel. The light green solid reaction product collected on the filter paper was washed three times with approximately 25 milliliters of water and then was dried in a vacuum oven for 1 hour 45 minutes at 65°C. The light green waxy solid was identified by infrared analysis to be methyltricaprylammonium beta-octamolybdate.

EXAMPLE XV

20.00 grams of methyltricaprylammonium chloride (Aliquat 336) were added to a 1000 milliliter round-bottom flask equipped with a water-cooled condenser and a mechanical stirrer. 200 milliliters of methanol then were added to the flask and stirring of the contents began. 13.92 grams of ammonium dimolybdate then were added to the flask along with 100 additional milliliters of methanol. 4.04 grams of a 37 percent hydrochloric acid solution were dissolved in 200 milliliters of methanol and were added to the flask. The contents of the flask were brought to reflux and refluxed while being stirred continuously for 1 hour. The liquid contents of the flask were poured through a Buchner funnel. A light green-yellow participate was collected on the filter paper. The participate was washed three times with about 25 milliliters of methanol and was dried in a vacuum oven for 2 hours 45 minutes at about 35°C. The light green-yellow reaction product was identified by infrared analysis to be methyltricaprylammonium hexamolybdate.

EXAMPLE XVI

1.51 grams of molybdenum oxide and 20 milliliters of a 1.0 molar solution of methyltricaprylammonium hydroxide in methanol were added to a 100 milliliter Erlenmeyer flask and stirred until the

molybdenum oxide dissolved. The contents of the flask were filtered and the filtrate was roto-evaporated to dryness. A light tan oily product was obtained. Infrared analysis identified the product as methyltricaprylammonium monomolybdate.

EXAMPLE XVII

10.63 grams of methyltricaprylammonium octamolybdate, 80 milliliters of acetonitrile and 16 milliliters of a 1.0 molar solution of methyltricaprylammonium hydroxide in methanol were added to a 100 milliliter Erlenmeyer flask and stirred overnight (approximately 16 hours). The contents of the flask were rotoevaporated to dryness. A light brown oily product was obtained. The product was washed with ethyl ether. The ether layer was decanted from the oily layer. The oily layer was dried to dryness on a rotoevaporator. Infrared analysis of the light brown oily product identified the product to be methyltricaprylammonium dimolybdate.

EXAMPLE XVIII

2.60 grams of methyltricaprylammonium dimolybdate and 50 milliliters of water were added to a 125 milliliter Erlenmeyer flask. 0.20 gram of a 37 percent hydrochloric acid solution was mixed with 50 milliliters of water and added to the flask. The contents of the flask were stirred for 5 minutes. 20 milliliters of methylene chloride were added to the flask and stirred with the contents of the flask. The methylene chloride layer was separated from the aqueous layer and rotoevaporated to dryness. A cream-colored wax-like product was obtained. Infrared analysis identified the light-colored product to be methyltricaprylammonium pentamolybdate.

EXAMPLE XIX

1.56 grams of a 37 percent hydrochloric acid solution were mixed with 200 milliliters of water and

added to a 500 milliliter round-bottom flask equipped with a water-cooled condenser and a mechanical stirrer. 10.00 grams of dimethyldioctadecylammonium bromide then were added to the flask. The contents of the flask were heated to reflux. 5.39 grams of ammonium dimolybdate were dissolved in 50 milliliter of hot water and added to the flask. The mixture in the flask was heated to reflux and refluxed for 30 minutes and filtered through a Buchner funnel. A cream-colored granular residue was collected on the filter paper. The residue was washed three times with about 50 milliliters of water and dried in a vacuum oven maintained at about 70°C. for 4 hours. 12.90 grams of residue were recovered which was identified by infrared analysis to be a mixture of dimethyldioctadecylammonium alpha-octamolybdate and dimethyldioctadecylammonium beta-octamolybdate.

EXAMPLE XX

3.39 grams of dimethyldioctadecylammonium octamolybdate and 20 milliliters of acetonitrile were added to a 50 milliliter Erlenmeyer flask and stirred for 1/2 hour. 0.05 milliliter of concentrated hydrochloric acid was added to the flask. The contents of the flask were stirred for 16 hours. The contents of the flask were filtered. The residue was dried in a vacuum oven at 40°C. for 3 hours. The residue was added to 20 milliliters of acetonitrile. The mixture was heated and stirred for 1/2 hour and filtered while still hot. A light-yellow residue was recovered and dried in a vacuum oven at 40°C. for 2 hours. Infrared analysis identified the residue as dimethyldioctadecylammonium hexamolybdate.

EXAMPLE XXI

10.00 grams of trioctylamine were added to a 500 milliliter round-bottom flask equipped with a

water-cooled condenser and a mechanical stirrer. 5.58 grams of a 37 percent hydrochloric acid solution were mixed with 200 milliliters of water and were added to the flask. 9.62 grams of ammonium dimolybdate were dissolved in 50 milliliters of water and added to the flask. The mixture in the flask was heated to reflux and refluxed for 10 minutes and then was cooled to room temperature (about 25°C.). The cooled mixture was poured into a Buchner funnel. A yellowish-green residue was collected on the filter paper. The residue was washed three times with about 50 milliliters of water and dried in a vacuum oven maintained at about 65°C. for 1-1/2 hours. Infrared analysis identified the residue to be a mixture of trioctylammonium alpha and beta-octamolybdates.

EEXAMPLE XXII

3.12 grams of trioctylammonium octamolybdate and 20 milliliters of acetonitrile were added to a 50 milliliter Erlenmeyer flask and stirred until the trioctylammonium octamolybdate was dispersed within the acetonitrile. 0.08 gram of concentrated sulfuric acid was mixed with 3 milliliters of water and added to the flask. The contents of the flask were warmed and stirred for 2 hours. The solid molybdate charged to the flask was converted to a light brown oily product. The contents of the flask were cooled to room temperature (about 25°C.). The acetonitrile/water layer was separated from the light brown oily layer. The oily product was washed three times with separate water washes of 20 milliliters of water, the oily layer being separated from the water wash after each wash. The oily product was dried in a vacuum oven at 40°C. for 16 hours. The dried oily product was dissolved in 20 milliliters of acetonitrile. 0.04 gram of concentrated sulfuric acid was added to the

solution and the resulting mixture was stirred for 1/2 hour. The mixture was rotoevaporated to dryness. A green oily product was obtained. The oily product was dried in a vacuum oven at 40°C. for 2 hours. Infrared analysis identified the product as trioctylammonium hexamolybdate containing a small amount of unreacted trioctylammonium octamolybdate.

The amine molybdates of the present invention have been found to be smoke retardant additives for vinyl chloride polymer compositions. When used as a smoke retardant additive, the amine molybdates desirably either are combined with the other ingredients of the vinyl chloride polymer composition on a roll mill or added by any other convenient mixing procedure. Preferably, from about 0.1 to about 20 parts by weight of the amine molybdate is used per 100 parts by weight of vinyl chloride polymer.

Vinyl chloride polymers with which the amine molybdates can be used as smoke retardant additives include homopolymers, copolymers and blends of homopolymers and/or copolymers, and include chlorinated polymers thereof. The vinyl chloride polymers may contain from 0 to 50 percent by weight of at least one other olefinically unsaturated monomer. Suitable monomers include 1-olefins containing from 2 to 12 carbon atoms such as ethylene, propylene, 1-butene, isobutylene, 1-hexene, 4-methyl-1-pentene, and the like; dienes containing from 4 to 10 carbon atoms, including conjugated dienes such as butadiene, isoprene, piperylene, and the like; ethylidene norbornene and dicyclopentadiene; vinyl esters and allyl esters such as vinyl acetate, vinyl chloroacetate, vinyl propionate, vinyl laurate, alkyl acetate, and the like; vinyl aromatics such as styrene, α-methyl styrene, chlorostyrene, vinyl toluene, vinyl naphthalene, and the like; vinyl allyl ethers and ketones such as vinyl methyl ether, allyl methyl ether, vinyl isobutyl ether, vinyl n-butyl ether, vinyl chloroethyl ether, methylvinyl ketone, and the like; vinyl nitriles such as acrylonitrile, methacrylonitrile, and the like; cyanoalkyl acrylates such as α-cyanomethyl acrylate, the α-ßand α-cyanopropyl acrylate, and the like; olefinically unsaturated acids and esters thereof including α,ß-olefinically unsaturated acids and esters thereof such as methyl acrylate, ethyl acrylate, chloropropyl acrylate, butyl acrylate, hexyl acrylate, 2-ethylhexyl acrylate, dodecyl acrylate, octadecylacrylate, methoxyethyl acrylate, ethoxyethyl acrylate, hexylthioethyl acrylate, methyl methacrylate, ethyl methacrylate, butyl methacrylate, and the like.

The vinyl chloride polymer, in addition to the amine molybdate, may contain the usual compounding ingredients known to the art such as fillers, stabilizers, opacifiers, lubricants, processing aids, impact modifiers, plasticizers, antioxidants, and the like.

Smoke retardancy may be measured using an NBS Smoke Chamber according to procedures described in ASTM E662-79 "Test For Specific Optical Density Of Smoke Generated By Solid Materials". Maximum smoke density (Dm) is a dimensionless number and has the advantage of representing a smoke density independent of chamber volume, specimen size or photometer path length, provided a consistent dimensional system is used. Percent smoke reduction is calculated using the equation:

$$\frac{\text{Dm/g of control} - \text{Dm/g of sample}}{\text{Dm/g of control}} \times 100$$

The term "Dm/g" means maximum smoke density per gram

of material. Dm and other aspects of the physical optics of light transmission through smoke are discussed fully in the ASTM publication.

Smoke retardance also may be measured using the Goodrich Smoke-Char Test. Test samples may be prepared by dry blending polymer resin and smoke retardant additives. The blend is ground in a liquid $N_2$-cooled grinder to assure uniform dispersion of the smoke retardant additives in the resin. Small (about 0.3g) samples of the polymer blend are pressed into pellets about 1/4 inch diameter for testing. Alternatively, test samples may be prepared by blending resin, smoke retardant additives and lubricant(s) or processing aid(s) in a blender such as an Osterizer blender. The blend is milled, pressed into sheets, and cut into small (about 0.3 gram) samples for testing. The test samples are placed on a screen and burned for 60 seconds with a propane gas flame rising vertically from beneath the samples. Sample geometry at a constant weight has been found not to be significant for the small samples used in this test. A Bernz-O-Matic pencil flame burner head is used with gas pressure maintained at about 40 psig. Each sample is immersed totally and continuously in the flame. Smoke from the burning sample rises in a vertical chimney and passes through the light beam of a Model 407 Precision Wideband Photometer (Grace Electronics, Inc., Cleveland, Ohio) coupled with a photometer integrator. Smoke generation is measured as integrated area per gram of sample.

The smoke retardant property of the amine molybdates of the present invention is illustrated by the following examples:

## EXAMPLE XXIII

The following recipe was used:

| Material | Parts/Wt. |
|---|---|
| Polyvinyl Chloride resin* | 100.0 |
| Lubricant** | 2.0 |
| Tin Stabilizer*** | 2.0 |
| Tetrapentylammonium molybdate | Varied |

*Homopolymer of vinyl chloride having an inherent viscosity of about 0.98-1.04; ASTM classification GO-5-15543.

**A commercial polyethylene powder lubricant (Microthene 510).

***Tin Thioglycolate

2.0 grams of the mixture of tetrapentylammonium hexamolybdate and tetrapentylammonium alpha-molybdate of Example I were mixed with 100.0 grams of the polyvinyl chloride resin of the aforesaid recipe on a two-roll mill. The lubricant and tin stabilizer of the recipe were added to the molybdate- polyvinyl chloride resin mixture and the resulting composition was milled on the mill for about 5 minutes at a roll temperature of about 165°C. The milled composition was pressed into a 6x6x0.50 inch sheet. Pressing was done at about 160°C. for 5 minutes using 40,000 pounds (about 14,900 Kg) of force applied to a 4-inch ram. The sample (Sample 1) received a 2 minute preheat before being pressed.

A sample (Sample 2) was prepared as described above except that 5.0 grams of the tetrapentylammonium molybdate mixture of Example I were used in the recipe instead of 2.0 grams of the mixture of Example I.

The molded samples were cut into 2-7/8x2-7/8x0.50 inch sections and tested against a control sample formed utilizing the aforesaid recipe

but without use of the molybdate additive. Testing was performed using the flaming mode of the NBS Smoke Chamber Test (ASTM E662-79) described hereinabove. The test results are given in Table I.

TABLE I

| Sample | Dm/g* | Smoke Reduction (%) |
|---|---|---|
| Control | 60.8 | --- |
| 1 | 34.6 | 43.1 |
| 2 | 30.5 | 49.9 |

*Dm/g = maximum smoke density per gram of sample.

EXAMPLE XXIV

The following recipe was used:

| Material | Parts/Wt. |
|---|---|
| Polyvinyl Chloride resin* | 100.0 |
| Lubricant** | 2.0 |
| Tin Stabilizer*** | 2.0 |
| Tri(tridecyl)ammonium molybdate | 5.0 |

*Homopolymer of vinyl chloride having an inherent viscosity of about 0.98-1.04; ASTM classification GO-5-15543.

**A commercial polyethylene powder lubricant (Microthene 510).

***Tin Thioglycolate

5.0 grams of the tri(tridecyl)ammonium hexamolybdate of Example VII, dissolved in 230 milliliters of methylene chloride, were slowly added with constant stirring to 100 grams of the polyvinyl chloride resin in a porcelain dish heated in a water bath maintained at 40°C. Stirring was continued until the polyvinyl chloride resin appeared to be dry. The molybdate-polyvinyl chloride resin mixture

was further dried in a vacuum oven at 40°C. for 28-3/4 hours. The lubricant and tin stabilizer of the recipe were added to the molybdate-polyvinyl chloride resin mixture and the resulting composition was milled on a two-roll mill for about 5 minutes at a roll temperature of about 165°C. The milled composition was pressed into a 6x6x0.050 inch sheet. Pressing was done at about 160°C. for 5 minutes using 40,000 pounds (about 14,900 Kg) of force applied to a 4-inch ram. The sample (Sample 3) received a 2 minute preheat before being pressed.

5.0 grams of the tri(tridecyl)ammonium molybdate mixture of Example VIII was mixed with other ingredients of the aforementioned recipe and formed into a 6x6x0.50 inch pressed sheet (Sample 4) as described above.

The molded samples were cut into 2-7/8x2-7/8x0.50 inch sections and tested against a control sample formed utilizing the aforesaid recipe but without use of the molybdate additive. Testing was performed using the flaming mode of the NBS Smoke Chamber Test (ASTM E662-79) described hereinabove. The test results are given in Table II.

TABLE II

| Sample | Dm/g* | Smoke Reduction (%) |
|---|---|---|
| Control | 63.0 | --- |
| 3 | 38.5 | 38.9 |
| 4 | 42.8 | 32.1 |

*Dm/g = maximum smoke density per gram of sample.

EXAMPLE XXV

The following recipe was used:

| Material | Parts/Wt. |
|---|---|
| Polyvinyl Chloride resin* | 100.0 |

| | |
|---|---|
| Lubricant** | 2.0 |
| Tin Stabilizer*** | 2.0 |
| Tridodecylammonium molybdate | 5.0 |

*Homopolymer of vinyl chloride having an inherent viscosity of about 0.98-1.04; ASTM classification GO-5-15543.

**A commercial polyethylene powder lubricant (Microthene 510).

***Tin Thioglycolate

5.0 grams of the tridodecylammonium alpha-octamolybdate of Example IX, dissolved in 135 milliliters of cyclohexane, were slowly added with constant stirring to 100 grams of the polyvinyl chloride resin contained in a porcelain dish heated in a water bath maintained at about 50° to 60°C. Mixing was continued until the polyvinyl chloride resin appeared to be dry. The molybdate-polyvinyl chloride resin mixture was heated in a vacuum oven maintained at 40°C. until the cyclohexane was evaporated from the sample. The lubricant and tin stabilizer of the recipe were added to the molybdate-polyvinyl chloride resin mixture and the resulting composition was milled on a two-roll mill for about 5 minutes at a roll temperature of about 165°C. The milled composition was pressed into a 6x6x0.05 inch sheet. Pressing was done at about 160°C. for 5 minutes using 40,000 pounds (about 14,900 Kg) of force applied to a 4-inch ram. The sample (Sample 5) received a 2 minute preheat before being pressed.

5.0 grams of the tridodecylammonium hexamolybdate of Example X, dissolved in 235 milliliters of methylene chloride, were mixed with constant stirring to 100 grams of polyvinyl chloride resin in a

procelain dish heated in a water bath maintained at 40°C. Mixing was continued while heating the mixture to about 45°C. until the polyvinyl chloride resin appeared to be dry. The resulting molybdate-polyvinyl chloride resin mixture was heated in a vacuum oven maintained at 40°C. until the methylene chloride was evaporated from the sample. The other ingredients of the aforesaid recipe were combined with the molybdate-polyvinyl chloride resin mixture and the resulting composition pressed into a test sample (Sample 6) as described above.

5.0 grams of the tridodecylammonium beta-octamolybdate of Example XI, dissolved in 255 milliliters of methylene chloride, were mixed with constant stirring to 100 grams of polyvinyl chloride resin in a porcelain dish heated in a water bath maintained at 40°C. Mixing was continued while heating the mixture until the polyvinyl resin appeared to be dry. The resulting molybdate-polyvinyl chloride resin mixture was heated in a vacuum oven maintained at about 45°C. until the methylene chloride was evaporated from the sample. The other ingredients of the aforesaid recipe were combined with the molybdate-polyvinyl chloride resin mixture and the resulting composition pressed into a test sample (Sample 7) as described above.

The molded samples were cut into 2-7/8x2-7/8x0.50 inch sections and tested against a control sample formed utilizing the aforesaid recipe but without use of the molybdate additive. Testing was performed using the flaming mode of the NBS Smoke Chamber Test (ASTM E662-79) described hereinabove. The test results are given in Table III.

TABLE III

| Sample | Dm/g* | Smoke Reduction (%) |
|---|---|---|
| Control | 63.0 | --- |

| | | |
|---|---|---|
| 5 | 42.9 | 32.0 |
| 6 | 43.4 | 31.2 |
| 7 | 40.7 | 35.3 |

*Dm/g = maximum smoke density per gram of sample.

EXAMPLE XXVI

The following recipe was used:

| Material | Parts/Wt. |
|---|---|
| Polyvinyl Chloride resin* | 100.0 |
| Lubricant** | 2.0 |
| Tin Stabilizer*** | 2.0 |
| Didodecyldimethylammonium molybdate | 5.0 |

*Homopolymer of vinyl chloride having an inherent viscosity of about 0.98-1.04; ASTM classification GO-5-15543.

**A commercial polyethylene powder lubricant (Microthene 510).

***Tin Thioglycolate

5.0 grams of the didodecyldimethylammonium betaoctamolybdate of Example XII were mixed with 100.0 grams of the polyvinyl chloride resin of the aforesaid recipe on a two-roll mill. The lubricant and tin stabilizer of the recipe were added to the molybdate/polyvinyl chloride resin mixture and the resulting composition was milled on the mill for about 5 minutes at a roll temperature of about 165°C. The milled composition was pressed into a 6x6x0.05 inch sheet. Pressing was done at about 160°C. for 5 minutes using 40,000 pounds (about 14,900 Kg) of force applied to a 4-inch ram. The sample (Sample 8) received a 2-minute preheat before being pressed.

The molded sample was cut into 2-7/8x2-7/8x0.50 inch sections and tested against a control sample formed utilizing the aforesaid recipe but without use of the molybdate additive. Testing was performed using the flaming mode of the NBS Smoke Chamber Test (ASTM E662-79) described hereinabove. The test results are given in Table IV.

TABLE IV

| Sample | Dm/g* | Smoke Reduction (%) |
|---|---|---|
| Control | 60.8 | --- |
| 8 | 28.0 | 53.9 |

*Dm/g = maximum smoke density per gram of sample.

0.075 gram of the didodecyldimethylammonium hexamolybdate of Example II was blended in a liquid nitrogen-cooled grinder with 1.50 grams of polyvinyl chloride resin (homopolymer of vinyl chloride having an inherent viscosity of about 0.98-1.04, ASTM classification GO-5-15543) as described above. The mixture (Sample 9) was cold pressed into 1/4 inch diameter pellets weighing about 0.3 gram each.

Testing for smoke reduction was performed using the Goodrich Smoke-Char Test described above. The test results are set forth in Table V.

TABLE V

| Sample | Spvc* | Smoke Reduction (%) |
|---|---|---|
| Control | 74.8 | --- |
| 9 | 43.2 | 42.2 |

*Smoke-char smoke number per gram of polyvinyl chloride resin in sample blend

EXAMPLE XXVII

The following recipe was used:

| Material | Parts/Wt. |
|---|---|
| Polyvinyl Chloride resin* | 100.0 |

| | |
|---|---|
| Lubricant** | 2.0 |
| Tin Stabilizer*** | 2.0 |
| Methyltricaprylammonium molybdate | 5.0 |

*Homopolymer of vinyl chloride having an inherent viscosity of about 0.98-1.04; ASTM classification GO-5-15543.

**A commercial polyethylene powder lubricant (Microthene 510).

***Tin Thioglycolate

5.0 grams of the methyltricaprylammonium betaoctamolybdate of Example XIV was milled with 100.0 grams of the polyvinyl chloride resin (in accordance with the aforesaid recipe) on a two-roll mill. The lubricant and tin stabilizer of the recipe were added to the composition on the mill. Milling was continued for about 5 minutes at a roll temperature of about 165°C. The milled composition was pressed into a 6x6x0.05 inch sheet. Pressing was done at about 160°C. for 5 minutes using 40,000 pounds (about 14,900 Kg) of force applied to a 4-inch ram. The sample (Sample 10) received a 2-minute preheat before being pressed.

5.0 grams of the methyltricaprylammonium hexamolybdate of Example XV were milled with 100 grams of the polyvinyl chloride resin (in accordance with the aforesaid recipe) on a two-roll mill. The lubricant and tin stabilizer of the recipe were added to the composition on the mill. Milling was continued for about 5 minutes at a roll temperature of about 165°C. The resulting composition was pressed into a test sample (Sample 11) as described above.

The molded samples were cut into 2-7/8x2-7/8x0.50 inch sections and tested against a

control sample formed utilizing the aforesaid recipe but without use of the molybdate additive. Testing was performed using the flaming mode of the NBS Smoke Chamber Test (ASTM E662-79) described hereinabove. The test results are given in Table VI.

TABLE VI

| Sample | Dm/g* | Smoke Reduction (%) |
|---|---|---|
| Control | 60.8 | --- |
| 10 | 25.6 | 58.1 |
| 11 | 31.9 | 47.4 |

*Dm/g = maximum smoke density per gram of sample.

0.075 gram of methyltricaprylammonium monomolybdate of Example XVI and 1.50 grams of polyvinyl chloride resin (homopolymer of vinyl chloride having an inherent viscosity of about 0.98-1.04, ASTM classification GO-5-15543) were blended together in a nitrogen-cooled grinder. The mixture (Sample 12) was cold-pressed into 1/4 inch diameter pellets weighing about 0.3 gram each.

0.075 gram of methyltricaprylammonium pentamolybdate of Example XVIII and 1.50 grams of polyvinyl chloride resin (same type as used above) were blended together in a nitrogen-cooled grinder. The mixture (Sample 13) was formed into pellets, as described above.

A "control" sample was prepared by forming pellets of the polyvinyl chloride resin.

Testing was performed using the Goodrich Smoke-Char Test described above. The test results are set forth in Table VII.

TABLE VII

| Sample | Spvc* | Smoke Reduction (%) |
|---|---|---|
| Control | 65.0 | --- |

| | | |
|---|---|---|
| 12 | 50.2 | 22.8 |
| 13 | 53.3 | 18.0 |

*Smoke-char smoke number per gram of polyvinyl chloride resin in sample blend

EXAMPLE XXVIII

The following recipe was used:

| Material | Parts/Wt. |
|---|---|
| Polyvinyl Chloride resin* | 100.0 |
| Lubricant** | 2.0 |
| Tin Stabilizer*** | 2.0 |
| Dimethyldioctadecylammonium molybdate | 2.0 |

*Homopolymer of vinyl chloride having an inherent viscosity of about 0.98-1.04; ASTM classification GO-5-15543.

**A commercial polyethylene powder lubricant (Microthene 510).

***Tin Thioglycolate

2.0 grams of the mixture of dimethyldioctadecylammonium octamolybdate of Example XX were mixed with 100.0 grams of the polyvinyl chloride resin of the aforesaid recipe on a two-roll mill. The lubricant and tin stabilizer of the recipe were added to the molybdate-polyvinyl chloride resin mixture and the resulting composition was milled on the mill for about 5 minutes at a roll temperature of about 165°C. The milled composition was pressed into a 6x6x0.050 inch sheet. Pressing was done at about 160°C. for 5 minutes using 40,000 pounds (about 14,900 Kg) of force applied to a 4-inch ram. The sample (Sample 14) received a 2-minute preheat before being pressed.

The molded samples were cut into 2-7/8x

2-7/8x0.50 inch sections and tested against a control sample formed utilizing the aforesaid recipe but without use of the molybdate additive. Testing was performed using the flaming mode of the NBS Smoke Chamber Test (ASTM E662-79) described hereinabove. The test results are given in Table VIII.

TABLE VIII

| Sample | Dm/g* | Smoke Reduction (%) |
|---|---|---|
| Control | 60.8 | --- |
| 14 | 39.9 | 34.4 |

*Dm/g = maximum smoke density per gram of sample.

EXAMPLE XXIX

The following recipe was used:

| Material | Parts/Wt. |
|---|---|
| Polyvinyl Chloride resin* | 100.0 |
| Lubricant** | 2.0 |
| Tin Stabilizer*** | 2.0 |
| Trioctylammonium molybdate | 5.0 |

*Homopolymer of vinyl chloride having an inherent viscosity of about 0.98-1.04; ASTM classification GO-5-15543.

**A commercial polyethylene powder lubricant (Microthene 510).

***Tin Thioglycolate

0.075 gram of the slightly impure trioctylammonium hexamolybdate product of Example II and 1.50 grams of polyvinyl chloride resin (homopolymer of vinyl chloride having an inherent viscosity of about 0.98-1.04, ASTM classification GO-5-15543) were blended together in a nitrogen-cooled grinder. The mixture (Sample 15) was cold-pressed into 1/4 inch diameter pellets weighing about 0.3 gram each.

A "control" sample was prepared by forming pellets of the polyvinyl chloride resin.

Testing was preformed using the Goodrich Smoke-Char Test described above. The test results are set forth in Table IX.

TABLE IX

| Sample | Spvc* | Smoke Reduction (%) |
|---|---|---|
| Control | 74.8 | --- |
| 15 | 39.5 | 47.2 |

*Smoke-char smoke number per gram of polyvinyl chloride resin in sample blend

The improved smoke retardant vinyl chloride polymer compositions obtained by the inclusion of an amine molybdate of the present invention in the composition are useful wherever smoke reduction is a desirable property, such as in carpeting, house siding, plastic components for aircraft and passenger car interiors, and the like.

THE CLAIMS

1. The amine molybdates selected from the group consisting of:

Tetrapentylammonium molybdates, having the empirical formula

$$[(C_5H_{11})_4N]_aMo_bO_cH_d$$

where a,b and c are (2,2,7); (3,5,17); (2,6,19); (6,7,24) or (4,8,26) and d is 0 or 1,

Tri(tridecyl)ammonium molybdates, having the empirical formula:

$$[(C_{13}H_{27})_3NH]_aMo_bO_c$$

where a, b and c are (2,6,19); (4,8,26) or (6,7,24),

Tridodecylammonium molybdates, having the empirical formula:

$$[(C_{12}H_{25})_3NH]_aMo_bO_c$$

where a, b, and c are (2,6,19); (6,7,24) or (4,8,26),

Didodecyldimethylammonium molybdates, having the empirical formula:

$$[(CH_3)_2(C_{12}H_{25})_2N]_aMo_bO_c$$

where a, b and c are (2,6,19); (6,7,24) or (4,8,26),

Methyltricaprylammonium molybdates having the empirical formula:

$$[CH_3(C_8H_{17})_3N)_aMo_bO_cH_d$$

where a, b and c are (2,1,4); (2,2,7); (3,5,17); (2,6,19) or (4,8,26) or (6,7,24) and d is 0 or 1,

Dimethyldioctadecylammonium molybdates, having the empirical formula:

$$[(CH_3)_2(C_{18}H_{37})_2N]_aMo_bO_c$$

where a, b and c are (2,6,19); (6,7,24) or (4,8,26) and

Trioctylammonium molybdates, having the empirical formula:

$$[(C_8H_{17})_3NH]_aMo_bO_c$$

where a, b and c are (2,6,19); (6,7,24) or (4,8,26).